# EUROPEAN PATENT APPLICATION

(11) **EP 1 132 153 A2**
(43) Date of publication of application: **12.09.2001**
(21) Application number: 01302193.6
(22) Date of filing: 09.03.2001
(51) Int. Cl.: B08B 9/00, B08B 7/02, F16K 51/00, B06B 1/18

(54) **Valve cleaning**

(30) Priority: 09.03.2000 GB 0005558
(71) Applicant: Enston, Eric James, Northwich, Cheshire, CW8 2EG (GB)
(72) Inventor: Enston, Eric James, Northwich, Cheshire, CW8 2EG (GB)
(74) Representative: Lyons, Andrew John

(57) **Abstract**

Valves are cleaned to stop them sticking by applying vibration to a valve component, typically the valve stem. An air driven vibrator (62) can be clamped (66) to the valve stem to apply the desired vibration.

## Description

This invention concerns a method and apparatus for valve cleaning.

Valves of all types can become ineffective over a period of time either because they cannot be closed properly because of a build up of sediment within the valve or they cannot be opened or closed because the movable parts have become stuck.

There exists, therefore, a need for a valve cleaning system that can be used to free valves. Chemical treatment of valves to remove sediment has been proposed but such treatment can be environmentally undesirable, especially for valves in pipelines carrying liquids that need to remain substantially uncontaminated.

On the other hand, dismantling of a valve for cleaning is time consuming and expensive, as is replacement of a valve.

An object of this invention is to provide an improved method and apparatus for valve cleaning.

According to this invention there is provided a method of valve cleaning-comprising applying vibration to a valve component.

The invention further comprises apparatus for valve treatment comprising a source of vibration and means for attaching said source to a valve component.

Vibratory treatment on a valve component is aimed at disturbing sediment and the like that prevents the valve operating properly, so that it can be flushed away, or simply breaking bonds formed between valve parts to release them.

Vibratory treatment is preferably applied to a valve stem, which may necessitate preliminary removal of turning wheels, gearboxes or any other components preventing direct access to the valve stem. The valve component may be an added component, such as a clamp, having a part to which the apparatus of the invention may be attached.

The magnitude of the vibratory treatment is preferably controlled to avoid damage to the valve. Both amplitude and frequency are preferably variable. Typically for a valve having packing glands, its bolts will be slackened before vibratory treatment in order to avoid damage to fibrous packing gland seals.

Furthermore, controlling the magnitude of the vibratory treatment is important to minimise dispersal of sediment into the flow of fluid through the valve. For fluids, such as drinking water, where dispersal of sediment is desirably avoided, it may be advantageous to tap the valve so that a flushing fluid can be introduced to the valve and exit from the valve to carry away sediment as it is freed rather than the sediment being flushed along the pipeline.

When a valve will not close properly because of sediment build up, the vibration treatment of the invention is preferably carried out in the following manner. Firstly, the valve is closed down as far as possible and vibration applied. Secondly, the valve is opened to flush away loosened sediment. The valve is closed down again and vibration applied followed by opening and flushing, these steps being repeated until the valve closes properly.

The source of vibration may be any suitable vibratory apparatus. For example, a poker vibrator, such as used for removing air from concrete, may be suitable for use in the apparatus of the invention. Another example of a suitable vibratory apparatus is an air driven vibrator.

The vibrator is preferably calibrated and preferably has a gauge or other suitable means of setting the vibration frequency and amplitude to desired levels.

Different fittings may be required for coupling the vibratory apparatus to the valve component.

The length of vibratory treatment will usually be about one to two hours but can be varied according to trial and error tests.

The method of the invention may further include the step of applying directional vibration to a valve component. Such directional vibration is preferably pulsed or of single shot duration. The directional vibration may be clockwise or anti-clockwise. Apparatus of the invention may, therefore, be provided with means for applying directional vibration. Such vibration means may comprise one or more vibrators arranged to impart directional vibration when operated. Such vibrators may be provided singly or in pairs.

Directional vibration is preferably used to turn a valve once it is freed in one position to a further position where main vibration treatment is needed. In other words the directional vibratory treatment can be used to turn a valve from one tight spot to another, once the valve is freed at each tight spot. This means that the vibratory apparatus of the invention does not have to be removed once a valve is initially freed for the valve to be turned to ascertain whether further vibratory treatment is required with the valve at another position. Thus, the vibratory treatment of a valve can be carried out from a remote location, especially with air driven vibrators using an air control unit. This will be an advantage for freeing treatment of underground valves, where vibratory treatment will be very noisy.

The method and apparatus of this invention may be applied to valves use in many different industries including water supply, gas, oil and chemical industries. The method and apparatus of the invention may be used on valves of various types including gate valves, ball valves, plug valves, check valves, butterfly valves, penstock level control valves, hydrostatic levellers and bellmouth valves. It will be appreciated that neither of the above lists is to be considered as exhaustive.

This invention will now be further described by way of example only, with reference to the accompanying drawings, in which:
Figure 1 shows a typical gate valve;
Figure 2 shows a typical hydrostatic leveller;
Figure 3 shows a penstock level control;
Figure 4 shows a first apparatus according to the invention;
Figure 5 is a front perspective view of a second apparatus according to the invention;
Figure 6 is a front elevational view of the apparatus of Figure 5; and
Figure 7 is a view from below of the apparatus of Figure 5.

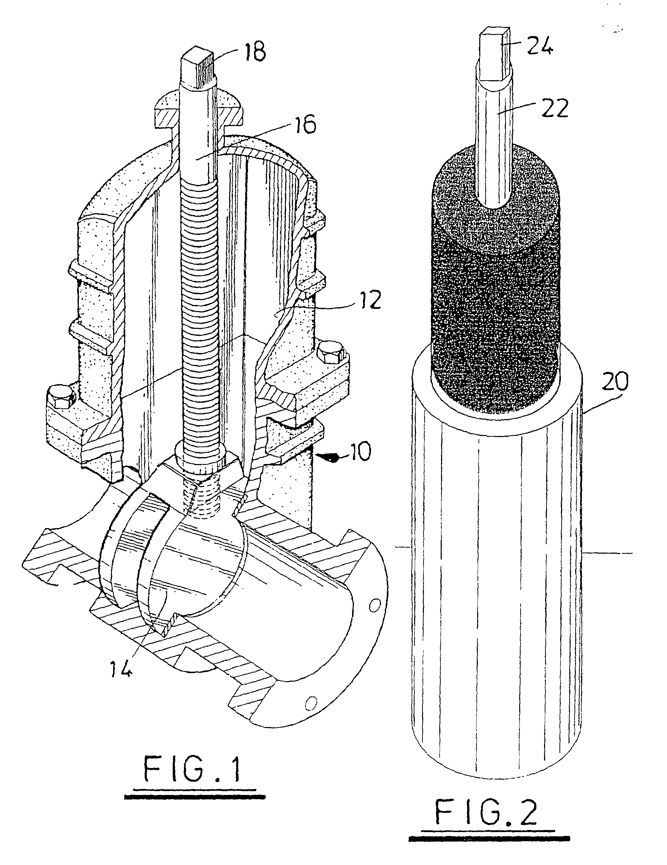

Figures 1, 2 and 3 of the accompanying drawings are provided to show examples only of valves to which the present invention may be applied. In Figure 1 gate valve 10 comprises a valve chamber 12 to which pipes can be connected at opposite ends, the chamber 12 containing a gate 14 on a spindle 16 extending through the top of the chamber. By turning the spindle, the gate 14 can either close the valve (as shown) or be turned to allow fluid flow through the valve. The spindle 16 will usually be turned by a wheel (not shown) on the head 18 of the spindle or possibly via a gearbox. The head 18 of the spindle provides a suitable attachment point for apparatus of the invention for applying vibratory treatment to the valve.

Figure 2 shows a hydrostatic leveller 20 used to compensate for fluid level changes in a tank. Again the hydrostatic leveller has a spindle 22, whose head 24 provides an attachment point for apparatus of the invention.

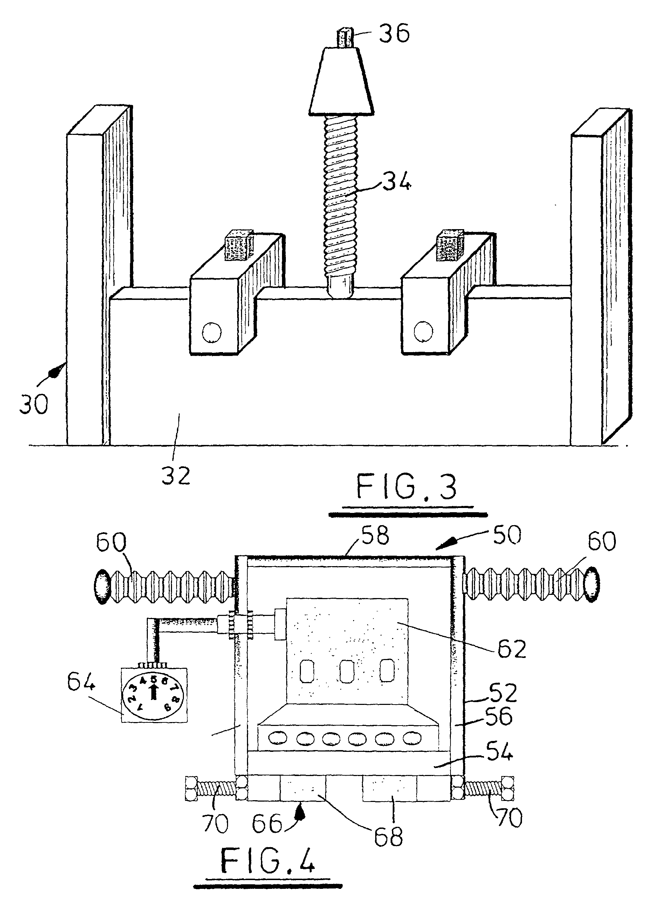

In Figure 3, a penstock level control 30 has a gate 32 that is raised or lowered to control fluid flow. The gate 32 is raised or lowered by means of a spindle 34. The spindle 34 has a head 36 to which vibratory apparatus of the invention may be attached.

In many cases valve spindles or stems have square or rectangular heads that provide opposed flats onto which gripping means of vibratory apparatus of the invention can be readily attached.

Turning to Figure 4 of the accompanying drawings, a vibratory treatment apparatus 50 for valves comprises a frame 52 having a base 54, sides 56 and a top 58. On each side 56 of the frame 52 is a carrying handle 60.

On the base 54 is mounted an air powered vibrator 62 having an air pressure gauge 64 for controlling and monitoring the air flow into the vibrator. The air is supplied by a pump (not shown) via the gauge 64.

On the underside of the base 54 is mounted a vice 66 having a pair of adjustable jaws 68. The jaws 68 can be tightened onto a valve stem head, such as 18, 24 or 36 in Figures 1, 2 and 3 respectively, or other valve component by mean of bolts 70, so that the vibration of the air vibrator is transmitted to the valve stem or other valve component.

The apparatus may be used simply by attachment thereof to a valve stem or other valve component by tightening of the jaws on either side of the component followed by vibration treatment at a suitable level for a period of say one to two hours. The valve can be tested periodically by removing the apparatus and trying the valve.

For a valve that will not close properly because of sediment build up, the vibration treatment is preferably applied when the valve is closed as far as possible. After vibration treatment the valve is opened to flush away loosened sediment and the treatment process is repeated until the valve can close properly.

For a valve of the type shown in Figure 1 of the drawings, which is typical of those used in the water industry, the chamber may be tapped to provide an inlet and an outlet for flushing fluid to remove loosened sediment and the like on a continuous basis during the vibratory treatment in order to reduce the risk of sediment entering the water supply as it is loosened.

For a penstock level control of the type shown in Figure 3 of the accompanying drawings, it may be desirable to apply vibratory treatment directly to the gate 32. Those gates are generally quite large and heavy so that vibratory treatment through the spindle 34 might not have sufficient effect to free the gate in a reasonable length of time. To apply the vibratory treatment to the gate 32 one or more clamps 38 may be attached to the gate. Each clamp 38 has a square head 40 onto which the apparatus of Figure 4 can be fixed. It may be expedient to use two vibratory apparatus at the same time, one on each clamp 38.

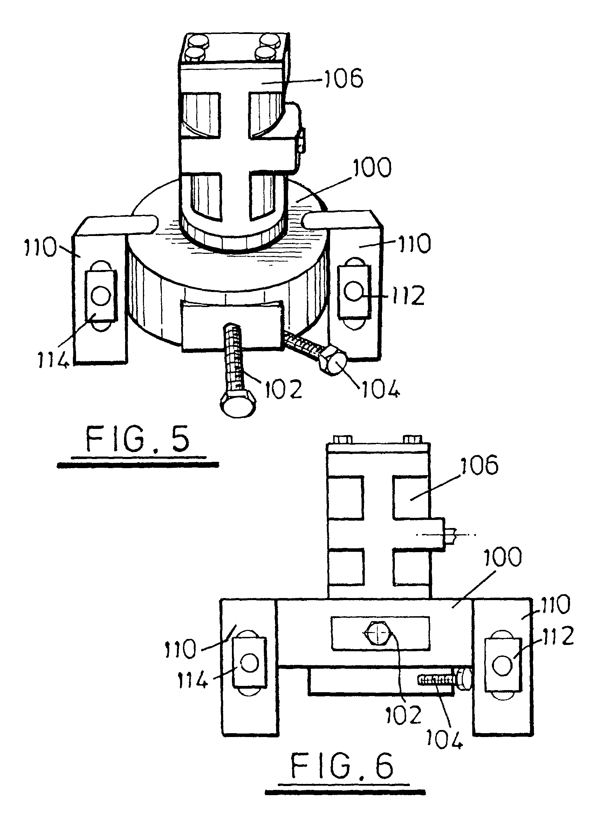

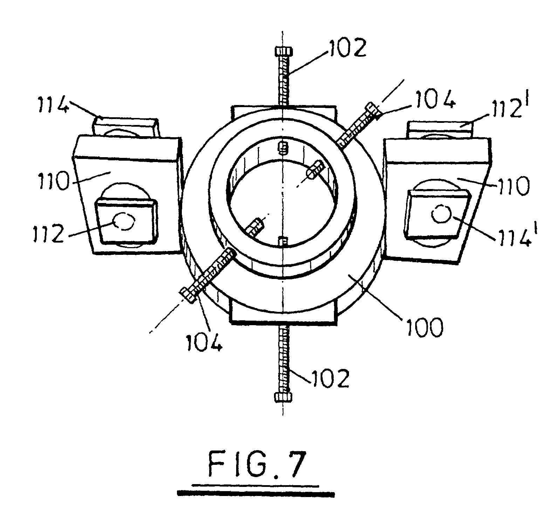

Finally Figures 5 to 7 of the accompanying drawings show another apparatus according to the invention comprising a base 100 in the form of a ring having two pairs of screw-in clamps 102 and 104 extending through the ring. In use the ring sits over a valve stem and the clamps are screwed in to grip the valve stem. Mounted on top of the base is an air driven vibrator 106 connected to an air supply therefor.

On opposite sides of the base is a pair of legs 110. On each leg is a pair of mini-vibrators 112,114 and 112', 114'. The vibrators 112 and 112' are on opposite sides of their respective legs to each other and are connected to the same air supply to produce one shot anti-clockwise rotation of the base when switched on. The other two vibrators 114 and 114' are correspondingly arranged to produce one shot clockwise rotation of the base of the apparatus and hence the stem of the valve to which the apparatus is attached.

An advantage of the apparatus of Figures 5 to 7 is that the directional vibration provided by the mini-vibrators, in addition to assisting in releasing a valve, once the valve shows signs of opening or closing in response to the main vibratory treatment, there is no need to remove the apparatus form the valve stem to manually turn the valve until another tight spot is found, because the appropriate mini-vibrators can be used to rotate the valve to the next tight spot, when the main vibratory treatment can be continued. Thus, the whole process of freeing a valve can be controlled using an air control unit. This has the added advantage that valve freeing can be controlled remotely of a valve. Many valves are sited underground and the noise level from the vibrators can be considerable, so to be able to operate the process from a remote location probably above ground is also of considerable advantage.

## Claims

1. A method of valve cleaning comprising applying vibration to a valve component.

2. A method as claimed in claim 1, wherein the vibration is applied to a valve stem.

3. A method as claimed in claim in claim 1, wherein the vibration is applied to a clamp affixed to a valve stem.

4. A method as claimed in claim 1, 2 or 3, wherein the amplitude of the vibration is variable.

5. A method as claimed in any one of claims 1 to 4, wherein the frequency of the vibration is variable.

6. A method as claimed in any one of claims 1 to 5 including the steps of tapping the valve and introducing flushing fluid.

7. A method as claimed in any one of claims 1 to 6 comprising the steps of closing down the valve as far as possible, applying vibration to the valve, opening the valve to flush away any sediment, closing the valve down again, applying vibration, opening the valve again to flush away sediment and repeating these steps until the valve closes properly.

8. A method as claimed in any one of claims 1 to 7, wherein the vibratory treatment is applied by means of a poker vibrator.

9. A method as claimed in any one of claims 1 to 7, wherein the vibratory treatment is applied by means of an air driven vibrator.

10. A method as claimed in any one of claims 1 to 9, wherein the vibratory treatment is applied for one to two hours.

11. A method as claimed in any one of claims 1 to 10, including the step of applying directional vibratory treatment to the valve component.

12. A method as claimed in claim 11, wherein the directional vibratory treatment is applied in either a clockwise or anti-clockwise direction.

13. Apparatus for valve treatment comprising a source of vibration and means for attaching said source to a valve component.

14. Apparatus as claimed in claim 13 comprising clamp means for attaching the source of vibration to a valve stem.

15. Apparatus as claimed in claim 13 or 14 comprising means for varying the amplitude of the applied vibration.

16. Apparatus as claimed in claim 13, 14 or 15 comprising means for varying the frequency of the applied vibration.

17. Apparatus as claimed in any one of claims 13 to 16, wherein the source of vibration is a poker vibrator.

18. Apparatus as claimed in any one of claims 13 to 16, wherein the source of vibration is an air driven vibrator.

19. Apparatus as claimed in any one of claims 13 to 18, wherein the vibrator is calibrated.

20. Apparatus as claimed in any one of claims 13 to 18, wherein the vibrator has a gauge for setting the amplitude and frequency of the applied vibration.

21. Apparatus as claimed in any one of claims 13 to 20 having means for applying directional vibration to the valve component.

22. Apparatus as claimed in claim 21, wherein the means for applying directional vibration is for applying clockwise vibration to the valve component.

23. Apparatus as claimed in claim 21, wherein the means for applying directional vibration is for applying anti-clockwise vibration to the valve component.

24. Apparatus as claimed in claim 21, 22 or 23, wherein the main vibration means and the directional vibration means are both air driven.

25. A method of valve cleaning substantially as hereinbefore described with reference to the accompanying drawings.

26. Apparatus for valve cleaning substantially as hereinbefore described with reference to and as illustrated in the accompanying drawings.
